# EUROPEAN PATENT APPLICATION

(11) **EP 1 591 305 A2**
(43) Date of publication of application: **02.11.2005**
(21) Application number: 05103414.8
(22) Date of filing: 27.04.2005
(51) Int. Cl.: B60N 2/28

(54) **Child seat to be used in vehicles**

(30) Priority: 28.04.2004 FI 20040601
(71) Applicant: Oy Klippan Ab, 01370 Vantaa (FI)
(72) Inventor: Martin, Bror, 01120 Västerskog (FI)
(74) Representative: Roitto, Klaus

(57) **Abstract**

The invention relates to a child seat to be used in vehicles, particularly in cars, the child seat comprising a basin-like inner part (3) for a baby, a body (2), and fixing means for attaching the basin-like inner part detachably to the body (2), which body (2) is designed as a safety seat for a child bigger than a baby and comprising a seat part (25) and a backrest (26) with a neck-head support (27) for the child at the upper end. In order for the child seat to be simple with respect to its structure and use but still a safe and comfortable transport means for a baby or alternatively a child much bigger than a baby, the body (2) and the basin-like inner part (3) comprise quick-fixing means (13 to 18) for locking the basin-like inner part (3) to a resting position, or alternatively to a sitting position in which it is more upright than in the resting position, and the body (2) comprises adjusting means (13) for adjusting the height of the neck-head support (27).

## Description

### BACKGROUND OF THE INVENTION

The invention relates to a child seat to be used in vehicles, particularly in cars, the child seat comprising a basin-like inner part for a baby, a body, and fixing means for attaching the basin-like inner part detachably to the body, which body is designed as a safety seat for a child bigger than a baby and comprising a seat part and a backrest with a neck-head support for the child at the upper end.

A child seat designed for bigger children is not suitable for a baby or a very small child because a big child seat does not protect a baby in a potential collision.

Babies are usually transported in seats designed for a child at the age of about 1 year at the most, after which the seat must be changed to one designed for a child at the age of 9 months to 3 years. Changing a child seat in a car from a small seat to a large one and vice versa may, depending on the seat type used, be rather an arduous task. In addition, acquiring two child seats is fairly expensive.

A child seat arrangement is known which comprises both a small and a large child seat that are rather easy to be alternatively attached to a vehicle by utilizing the same body. Then, the child seat corresponding to the child's size is attached to the body. Such a system is relatively expensive because it requires three expensive components, i.e. two child seats and a body for them. Further, replacing a small child seat with a large one and vice versa requires two work steps, i.e. detaching the seat to be replaced from the body, and attaching the replacing seat to the body. Yet another disadvantage is that there must be a storage place for the child seat not in use. If the storage location is the boot or interior of a car and if the child seat to be stored is the larger one, the seat takes a lot of space in the boot or interior.

In order to eliminate the above drawbacks, publication DE 19805331 discloses a child seat of the type mentioned in the preamble, comprising a baby seat as well as a seat for a child bigger than a baby, the baby seat being attachable to this other seat. The purpose of the child seat is, depending on its using position, to protect the baby or alternatively the older child if the vehicle is subjected to a collision. Thus, this known child seat offers one solution to a problem relating to most child seats, in other words to the problem of the child seat only being suitable for children whose sizes cannot vary very much.

Although the child seat of DE 19805331 allows transport of both babies and bigger children, its limitation is that a safe and comfortable sitting position is provided only for a relatively small child. Further, this known child seat does not enable a comfortable or safe resting position for babies.

### BRIEF DESCRIPTION OF THE INVENTION

An object of the present invention is to provide a novel child seat that eliminates the above drawbacks, has simple use characteristics and is, despite its fairly simple structure, suitable to be used for babies or alternatively for children much bigger than babies, offering on all occasions the required support and a comfortable position irrespective of the child's size. To implement this, the child seat according to the invention is characterized in that the body and the basin-like inner part comprise quick-fixing means for locking the basin-like inner part to a resting position, or alternatively to a sitting position in which it is more upright than in the resting position, and that the body comprises adjusting means for adjusting the height of the neck-head support.

The body of the child seat according to the invention does not function only as a fixing piece between the child seat and the vehicle, but the body can be used as a safety seat for children of even very different sizes (provided that the basin-like inner part intended for a baby has been removed from the body). The body has thus three important functions: 1) it serves as a fixing means and support for the "basin" in such a way that the "basin" can be adjusted to different using positions: sitting position and resting position that comes close to a lying position; 2) it serves as a safety seat for children much bigger than babies when the "basin" (the basin-like inner part) has been detached from the body; and 3) it serves as a means attaching the child seat to the vehicle.

The quick-fixing means of the child seat allow the basin-like inner part to be both detached from the body and attached to the body easily and quickly.

Preferred embodiments of the invention are disclosed in the attached claims 2 to 9.

A great advantage of the child seat according to the invention is that its structure is simple but it is, nevertheless, suitable to be used for babies and alternatively for children much bigger than babies, offering in all situations a safe and comfortable transport means for babies and bigger children. It is easy to convert from a small baby seat into a seat for a bigger child, and vice versa. This conversion can be done inside the car.

### BRIEF DESCRIPTION OF THE DRAWINGS

The invention will be described now by means of one embodiment, with reference to the attached drawing, in which
Figures 1 and 2 illustrate the child seat seen from one side and obliquely from above, respectively, the basin-like inner part being positioned in a first using position for the baby, i.e. in a sitting position;
Figure 3 shows the child seat seen from behind, obliquely from above, the basin-like inner part being in the same using position as in Figures 1 and 2;
Figure 4 shows the child seat in a second using position, in which the basin-like inner part is turned to nearly a lying position for the baby;
Figure 5 shows the child seat in a position where the basin-like inner part is in the second position and the neck-head support is turned forwards and downwards; and
Figure 6 illustrates how the body of the child seat makes up a safety seat for a child much bigger than a baby, when the basin-like inner part intended for a baby has been detached from the body.

### DETAILED DESCRIPTION OF THE INVENTION

In the attached figures, the padding of the child seat is omitted for the sake of simplicity, although a real child seat comprises padding.

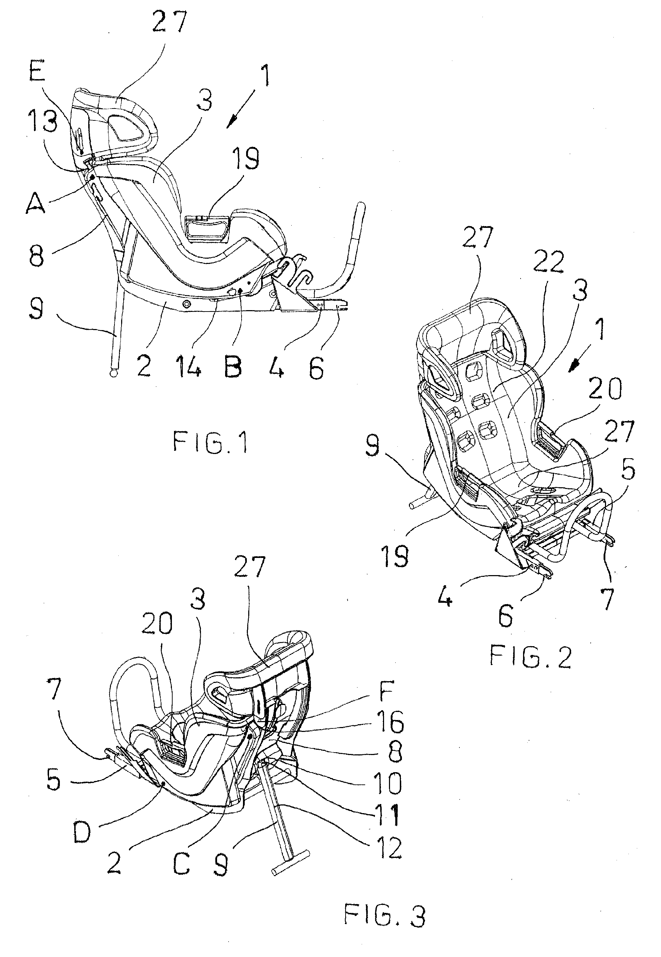

The child seat for a baby, shown in Figures 1 and 2, is generally indicated by reference numeral 1. The child seat 1 comprises a body 2 and a basin-like inner part 3 for a baby. The basin-like inner part 3, which can here be called a "basin", is detachably attached to the body 2 and makes up, together with the body, a safety seat for a baby.

Reference numerals 4 and 5 indicate bar-like members protruding from the body 2, at the ends of which there are fixing means 6, 7 for attaching the child seat to a car (not shown). The car naturally has corresponding fixing means to receive the fixing means 6, 7 detachably. The fixing means 6, 7, are of the type of quick-fixing means.

Reference numeral 8 indicates the back support or backrest of the child seat. When the child seat is attached to a car, the back support 8 and the baby's/child's back are in the driving direction.

The body 2 comprises a floor support 9 for supporting the child seat against the car floor. The floor support 9 comprises telescopic tubes 11, 12 that enable adjustment of the length of the floor support. The adjustment facilitates the installation of the child seat. Naturally, the floor support 9 comprises locking means for locking the telescopic tubes 11, 12 in the desired position. The structure of the locking means is not described in this context, as a person skilled in the art will have no difficulties in designing locking means suitable for the purpose. The floor support 9 is turnably attached to the back support 8 by means of a joint 10, which facilitates the installation of the floor support at a point where it gives good support for the child seat; see Figure 3. The floor support 9 can be locked by means of locking means at a desired angle relative to the body 2. The structure of these locking means is not described in this context either, as a person skilled in the art will have no difficulties in designing locking means suitable for the purpose.

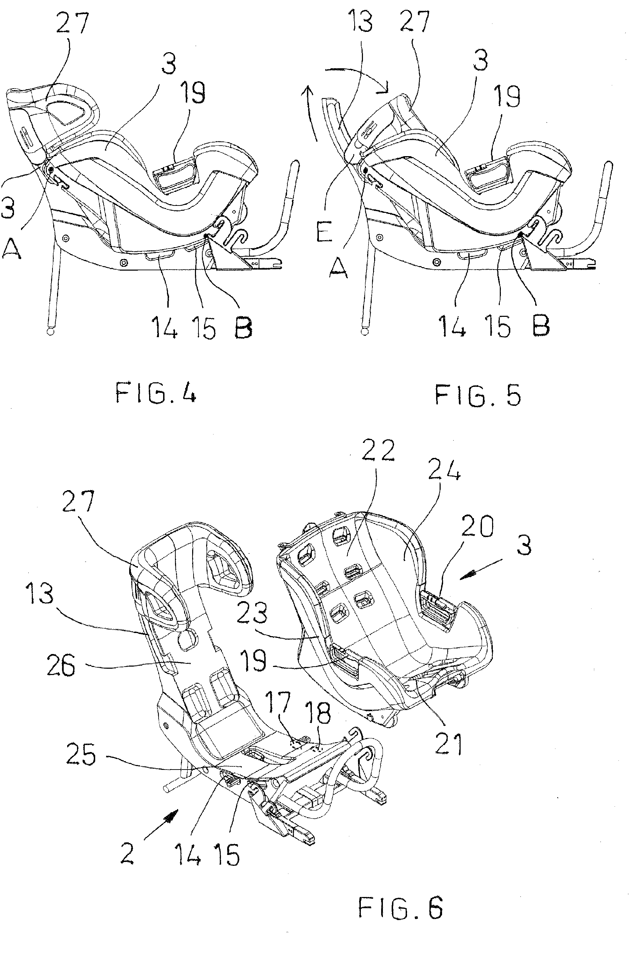

In Figures 1 to 3, the basin-like inner part 3 is locked to the sitting position, whereas in Figures 4 and 5 it is locked to the resting position, which is nearly a lying position.

To lock the basin-like inner part 3 to the body 2 in the desired position of the two using positions (sitting position and resting position), the inner part comprises four protrusions arranged to be locked into the holes 13, 14, 15 in the body 2. The protrusions are preferably pin-like members. The protrusions are not seen in the figures because they point inwards, but they are located at points A and B of the basin-like inner part 3. The protrusion at point A is locked into the hole 13 irrespective of whether the basin-like inner part 3 is in the sitting or in the resting position. Thus, when the length of the hole 13 is made sufficiently great, the backrest does not have to comprise several pairs of holes to lock the protrusion at point A.

The protrusion at point B is locked into the hole 14 when the inner part is in the sitting position (cf. Figure 1) and into the hole 15 when the inner part is in the resting position (cf. Figure 4). There are such protrusions on both sides of the basin-like inner part 3 and such holes on both sides of the body 2; cf. protrusions at points C and D and hole 16 in Figure 3, and holes 17 and 18 indicated by broken line in Figure 6. Hence, there are four protrusions and six holes altogether. The pair of holes 14 and 17 is displaced in the longitudinal direction of the body 2 relative to the pair of holes 15 and 18.

It is seen from Figure 5 that the hole 13 at the upper part of the body 2 is elongated. Owing to this, the hole 13 serves to receive the protrusion of point A, irrespective of whether the basin-like inner part 3 is in the sitting or resting position. The protrusions at points A and C can be inserted in place into the holes 13 and 16 by bending the inner part 3, which is made slightly elastic. Elastic recovery keeps the protrusions of points A and C in place in the holes 13 and 16.

The protrusions at points B and D are spring-loaded. When these protrusions are pulled (or pushed) outwards from the sides of the inner part 3, the inner part 3 can be installed at the point of the pair of holes 14 and 17 or alternatively at the pair of holes 15 and 18. Releasing the spring loading makes the protrusions at points B and D go into the desired pairs of holes.

Thus, the protrusions at points A to D function not only as means for fixing the basin-like inner part 3 in different using positions, but also as quick-fixing means attaching the basin-like inner part 3 to the body 2.

Figure 6 illustrates the body 2 when the basin-like inner part 3 has been detached from it. In this figure the fixing means mentioned above have been opened; in other words, the protrusions at points A to D have been detached from their respective holes 13 to 18.

The child seat preferably comprises a lifting handle with which the basin-like inner part 3 can be easily lifted off the body 2 and moved elsewhere. The reference numerals 19 and 20 indicate the lifting handle. A need to remove the inner part 3 from the body 2 arises for example when it is not desirable to leave the baby in the car but to carry it in the inner part 3, whereby the inner part can be easily used as a transferable seat. Thus, the basin-like inner part 3 is an independent entity comprising not only a seat part 21 but also a backrest 22 which preferably comprises sides 23, 24 designed to give lateral support to the baby.

Although, for the sake of clarity, the padding of the child seat is omitted (to illustrate the structure of the child seat more clearly), the intention of Figure 6 is to show that the child seat body 2 constitutes a complete safety seat for a child essentially bigger than a baby. Thus, the body or safety seat 2 comprises a seat part 25, a backrest 26 and a neck-head support 27. The seat part 25 and the backrest 26 preferably include sides designed to give lateral support to the child. For simplicity, the sides are omitted from the figures. The neck-head support 27 that forms an extension to the backrest 26 (back support 8), protects the child's head also against sideways collisions.

The neck-head support 27 comprises adjusting means to adjust its height. The adjusting means comprise pins (cf. Figures 1 and 3) or other protrusions arranged at points E and F on opposite sides of the neck-head support 27 and designed to be inserted into the grooves 13 and 16. When a child essentially bigger than a baby is to be carried, the child is seated in the safety seat 2. Having been detached from the safety seat 2, the basin-like inner part 3 intended for a baby can be simply put in the boot of the car. The basin-like inner part 3 is rather small, so there is plenty of space for it in the boot. When there is a need to transport a baby in the car, the basin-like inner part 3 is reinstalled in the body, i.e. safety seat 2.

It is seen from Figure 5 that the head-neck support 27 is turnable downwards and inwards towards the basin-like inner part 3. The above protrusions at points E and F function as joints for turning the head-neck support 27 and adjusting its inclination. When the head-neck support 27 is turned to the position of Figure 5, it offers sun protection for the baby.

Above, the child seat has been described with reference to only one preferred embodiment, and therefore it should be noted that its details may vary in a plurality of ways within the scope of the attached claims. Thus, the locking mechanism with which the basin-like inner part 3 is attached to the safety seat / body 2 may vary. Instead of pin-like protrusions, locking tongues or protrusions of another shape which are to be locked into holes or other recesses can be used as quick-fixing means. Thus, instead of holes, for instance slots or grooves may be used. It is naturally feasible that the protrusions are located in the body rather than in the basin-like inner part, in which case the corresponding recesses, holes or grooves are located in the basin-like inner part. The number of fixing means may vary. The quick-fixing means for changing the using position of the basin-like inner part are not necessarily the same as those with which the inner part is attached to the body. It is, however, very preferable that the fixing means be the same for both purposes. Naturally it is also feasible that the child seat is installed in a vehicle other than a car.

## Claims

1. A child seat to be used in vehicles, particularly in cars, the child seat comprising a basin-like inner part (3) for a baby, a body (2), and fixing means for attaching the basin-like inner part detachably to the body (2), which body (2) is designed as a safety seat for a child bigger than a baby and comprising a seat part (31) and a backrest (8) with a neck-head support (16) for the child at the upper end, **characterized in that** the body (2) and the basin-like inner part (3) comprise quick-fixing means (13 to 18) for locking the basin-like inner part (3) to a resting position, or alternatively to a sitting position in which it is more upright than in the resting position, and that the body (2) comprises adjusting means (13) for adjusting the height of the neck-head support (27).

2. A child seat (1) according to claim 1, **characterized in that** the quick-fixing means (13 to 18) constitute said fixing means.

3. A child seat (1) according to claim 1, **characterized in that** the quick-fixing means comprise a protrusion and a recess (13 to 18) arranged to cooperate.

4. A child seat (1) according to claim 3, **characterized in that** there are two pairs of recesses (14, 17 and 15, 18) on both sides of the body (2), displaced in the longitudinal direction of the body.

5. A child seat (1) according to claim 4, **characterized in that** there are protrusions at the upper end of the inner part (3), to be locked into the recesses (13, 16) on the opposite sides in the upper part of the body (2).

6. A child seat according to claim 5, **characterized in that** the protrusions (13, 16) in the upper part of the body (2) are elongated, as seen from the longitudinal direction of the backrest of the body, and their length is sufficiently great to provide attachment for the protrusions when the inner part (3) is alternatively in the sitting or in the resting position.

7. A child seat (1) according to claim 6, **characterized in that** the neck-head support (27) is turnably attached to the elongated recesses (13, 16) in the upper part of the body to adjust the inclination angle of the neck-head support.

8. A child seat (1) according to claim 1,**characterized in that** the adjusting means (13) comprise turning means for adjusting the inclination angle of the neck-head support (27).

9. A child seat (1) according to claim 7 or 8, **characterized in that** the head-neck support (27) is turnable into the inside of the basin-like inner part (3) in such a way that it constitutes protection for the baby.
